# EUROPEAN PATENT APPLICATION

(11) **EP 1 280 326 A1**
(43) Date of publication of application: **29.01.2003**
(21) Application number: 01202843.7
(22) Date of filing: 25.07.2001
(51) Int. Cl.: H04M 3/533, H04L 12/58

(54) **Sending a voicemail message as an email attachment with a voice controlled interface for authentication**

(71) Applicant: The Sound of Data B.V., 3006 AG Rotterdam (NL)
(72) Inventor: Hazelaar, Peter Johan, 3065 LA Rotterdam (NL)
(74) Representative: Jorritsma, Ruurd

(57) **Abstract**

Voice mail system that sends e-mails with voice attachments that can be controlled using a voice recognition interface, thus allowing a user of a mobile phone to communicate without the cumbersome dialing of keys and other codes that have to be memorized.
Server for sending voice-based messages using e-mail and storing such messages as voice-mail, including a processor, memory, and input/output, and being connected to a network, the memory including a user database, and the server being arranged with the following messaging functions:
- to record a spoken message received from a caller as a voice-mail message for a recipient, the recipient having an e-mail address;
- to replay the voice-mail message for the recipient;
- to convert the spoken message into a data file, the data file being playable as sound;
- to attach the data file as an attachment to an e-mail message;
- to send the e-mail message to the e-mail address of the recipient;
the server further being arranged with a voice controlled interface for the caller to enable the following control capabilities:
- verification of the caller's identity;
- selection of the recipient; and
- control of the messaging functions.

## Description

### Field of the invention

The present invention relates to a server arrangement for sending voice-based messages using e-mail and storing such messages as voice-mail, as defined in the preamble of claim 1.

### Prior art

Such a server arrangement for sending voice-based messages using e-mail and storing such messages as voice-mail is known from WO 00/27099. WO 00/27099 discloses a method to store and forward a telephone call for a called party when the called party does not answer the telephone call or the telephone line is engaged. In that case, the incoming telephone call is re-routed to a system which records a message from the calling party. This message is then converted to a ".WAV" file which is forwarded as an attachment of an e-mail message to the e-mail address of the called party. According to WO 00/27099, the calling party must dial the telephone number of the called party, or alternatively, a telephone number of an answering service. In case of calling the answering service, the calling party must identify the called party by keying-in the telephone number of the called party, or a code number relating to an address book of the caller to identify the called party. Disadvantageously, a caller must dial a sequence of at least a telephone number and a code number to reach the called party. This mode of operation is cumbersome. Moreover, keying-in the numbers may be even more difficult, when the caller needs to look-up the numbers. For callers using a mobile phone interaction with such an answering service may be even more difficult, since the caller usually cannot listen to the service while keying-in additional codes.

### Summary of the invention

It is an object of the present invention to improve the interaction between the caller and the answering service by providing the caller with a single telephone number to enter the service and with voice-control to leave a message for the called party.
The present invention relates to a server arrangement for sending voice-based messages using e-mail and storing such messages as voice-mail, comprising processing means, memory means, and input/output means, the processing means being connected to the memory means and to the input/output means, the input/output means being connected to a network, the memory means comprising a user database, the server arrangement being arranged with the following messaging functions:
- to record a spoken message received from a caller as a voice-mail message for a recipient, the recipient having an e-mail address;
- to replay the voice-mail message for the recipient;
- to convert the spoken message into an electronic data file, the electronic data file being playable as sound;
- to attach the electronic data file as an attachment to an e-mail message;
- to send the e-mail message to the e-mail address of the recipient;
characterised in that
the server arrangement is arranged with a voice controlled interface for the caller to enable the following control capabilities of the server arrangement:
- verification of the identity of the caller;
- selection of the recipient; and
- control of the messaging functions.

By using voice-control, the caller can advantageously interact in a simple way with the answering service without the need of keying-in (and remembering) additional codes or numbers. Especially for callers using a mobile phone, the interaction is much improved and consequently less distracting because the caller may continue to listen to the service while speaking his voice commands.

Moreover, the present invention relates to a method for sending voice-based messages using e-mail and storing such messages as voice-mail, comprising steps to enable the following messaging functions:
- recording a spoken message received from a caller as a voice-mail message for a recipient, the recipient having an e-mail address;
- replaying the voice-mail message for the recipient;
- converting the spoken message into an electronic data file, the electronic data file being playable as sound;
- attaching the electronic data file as an attachment to an e-mail message;
- sending the e-mail message to the e-mail address of the recipient;
characterised in that
the method comprises the step of enabling by means of a voice controlled interface for the caller the following control capabilities:
- verification of the identity of the caller;
- selection of the recipient; and
- control of the messaging functions.

Furthermore, the present invention relates to a computer program product to be loaded by a server arrangement for sending voice-based messages using e-mail and storing such messages as voice-mail, comprising processing means, memory means, and input/output means, the processing means being connected to the memory means and to the input/output means, the input/output means being connected to a network, the memory means comprising a user database, the server arrangement being arranged with the following messaging functions:
- to record a spoken message received from a caller as a voice-mail message for a recipient, the recipient having an e-mail address;
- to replay the voice-mail message for the recipient;
- to convert the spoken message into an electronic data file, the electronic data file being playable as sound;
- to attach the electronic data file as an attachment to an e-mail message;
- to send the e-mail message to the e-mail address of the recipient;
the computer program product, after being loaded by the server arrangement, providing the server arrangement by means of a voice controlled interface for the caller with the capability to control:
- verification of the identity of the caller;
- selection of the recipient; and
- the messaging functions.

The present invention also relates to a data carrier provided with a computer program product as defined above.

### Brief description of drawings

Below, the invention will be explained with reference to some drawings, which are intended for illustration purposes only and not to limit the scope of protection as defined in the accompanying claims.
Figure 1 shows schematically a system for spoken e-mail messages according to the present invention;
Figure 2 shows schematically a server arrangement as used in the system according to the present invention;
Figure 3 shows schematically a database record of a user database as used by the server arrangement;
Figure 4 shows schematically a flow diagram for a procedure to be carried out by the server arrangement in order to create and to distribute spoken e-mail messages;
Figure 5 shows schematically a flow diagram for a log-in procedure to be carried out by the server arrangement according to the present invention;
Figure 6 shows schematically a flow diagram for a procedure to be carried out by the server arrangement in order to select a destination address for a spoken e-mail message;
Figure 7 shows schematically a flow diagram for a procedure to be carried out by the server arrangement in order to enter a spoken e-mail message;
Figure 8 shows schematically a flow diagram for a procedure to be carried out by the server arrangement in order to allow a user to control the further processing of the spoken e-mail message;
Figure 9 shows schematically a flow diagram for a procedure to be carried out by the server arrangement in order to send a spoken e-mail message;
Figure 10 shows schematically a preferred embodiment of the server arrangement according to the present invention.

### Description of preferred embodiments

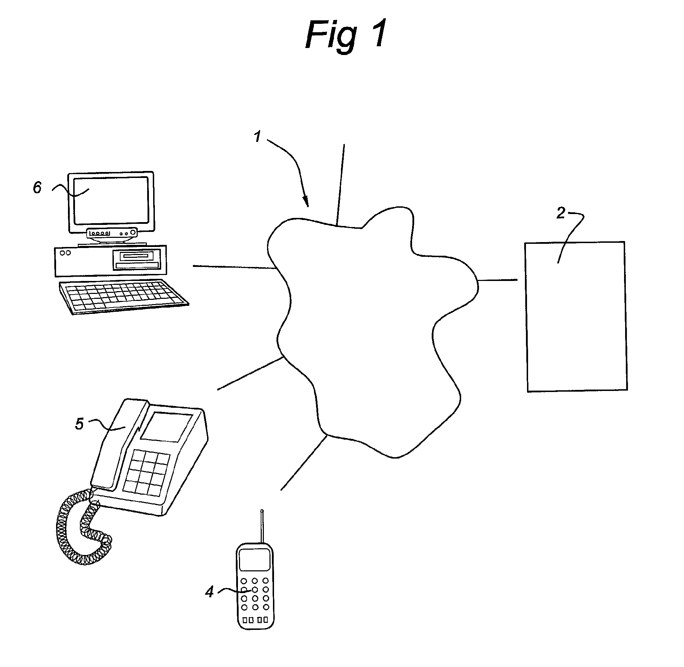

Figure 1 shows a general overview of the system according to this invention. A server arrangement 2 is connected to a network 1. The network 1 may comprise a plurality of interconnected networks, that may be the Public Switched Telephone Network (PSTN), or any other network suitable for data transmission. For instance such an interconnected network may be a Local Area Network (LAN), or a Wide Area Network (WAN), etc. The network 1 of the system, preferably, is a global network. It may use the network known as the Internet, but it may also use a private network. A plurality of communication devices such as a mobile telephone 4, a wired telephone 5, and a personal computer 6 is connected to the network 1, via suitable I/O means. Below, it will be assumed that the personal computer 6 is a computer arrangement associated with a recipient of a spoken e-mail message as created by the server arrangement 2 and any of the telephones 4, 5 are associated with a sender of such an e-mail message.

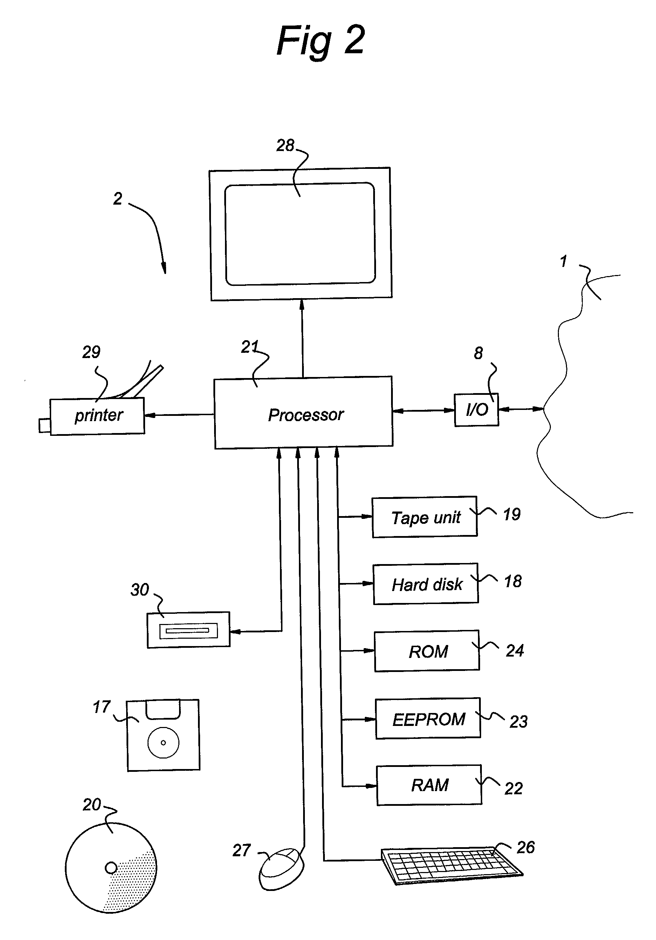

Figure 2 shows a general overview of a server arrangement 2 to illustrate the invention, comprising host processor means 21 with peripherals. The host processor means 21 are connected to memory units 18, 19, 22, 23, 24 which store instructions and data, one or more reading units 30 (to read, e.g., floppy disks 17, CD ROM's 20, DVD's, etc.), a keyboard 26 and a mouse 27 as input devices, and as output devices, a monitor 28 and a printer 29. Other input devices, like a trackball, a touch screen or a scanner, as well as other output devices may be provided.

An input/output (I/O) device 8 is provided for a connection to the network 1. The I/O device 8 is arranged for voice and data-communication over the network 1.

The memory units shown comprise RAM 22, (E)EPROM 23, ROM 24, tape unit 19, and hard disk 18. However, it should be understood that there may be provided more and/or other memory units known to persons skilled in the art. Moreover, one or more of them may be physically located remote from the processor means 21, if required.

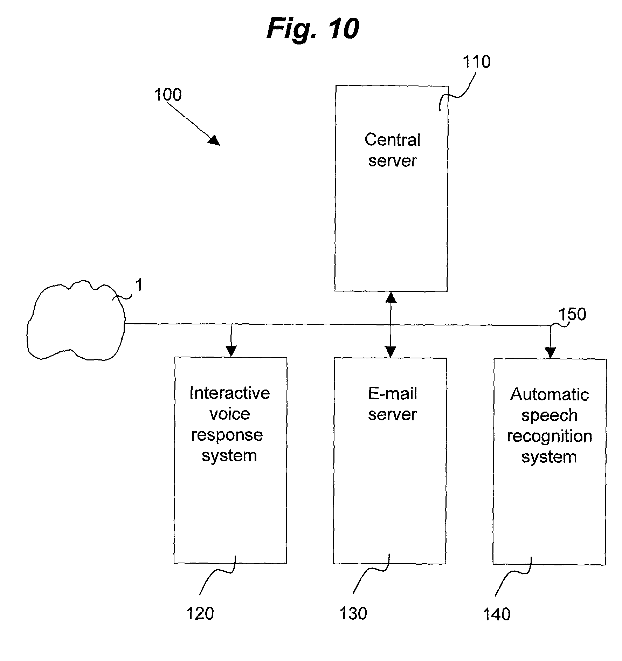

The processor means 21 are shown as one box, however, they may comprise several processing units functioning in parallel or controlled by one main processor, that may be located remotely from one another, as is known to persons skilled in the art. With reference to Figure 10 a preferred embodiment of the server arrangement 2 will be explained in more detail.

The server arrangement 2 of the present invention is capable of creating and distributing e-mail messages that contain spoken messages. A user may use a telephone 4, 5 to enter a spoken message for another person. The server 2 is arranged to handle voice input of the user to accomplish this task, by using interactive voice response (IVR), automatic speech recognition (ASR) and speech synthesis (text-to-speech, TTS) technology. Speech synthesis technology may be used to generate "dynamic text" i.e. text comprising information specific for e.g., the user or the addressee. Also replay of pre-recorded audio signals may be used at suitable events to generate "static text" for a caller on how to proceed. These technologies allow the application of an audio user interface over the telephone 4, 5, in which the user may use spoken commands to the system and direct voice input for the spoken e-mail message.

The server arrangement 2 according to present invention uses a user database which comprises necessary information to create and distribute spoken e-mail messages for a user. This information is needed to ensure the identity of the user. Also, this information may comprise an address book with the e-mail addresses of recipients that the user may want to contact by a spoken e-mail message. In a preceding registration procedure a user must provide the server arrangement with this information. Preferably, the user provides this information via the Internet by means of a web browser program.

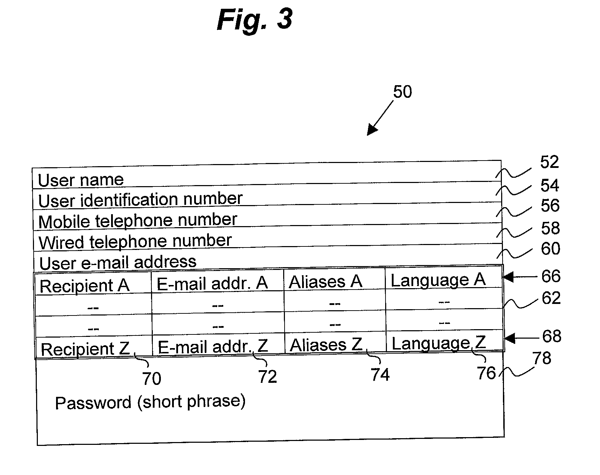

Figure 3 shows schematically a record 50 of the user database 400 as used by the server 2. In the server arrangement 2 according to the present invention, a user database 400 is used to store all relevant data of the users. The user database 400 may contain a single table or a plurality of tables, which are linked to each other, to make up complete records for all users individually. Thus, the record 50 of the user database 400, as shown in Figure 3, may be built from a single table, or from a larger number of separate tables, which each contain specific information about the users of the server 2.

The record 50 for a user may contain the following information: the name of the user 52, a user identification number 54, the user's mobile telephone number 56, the telephone number 58 of a user's wired telephone, the user's e-mail address 60. Further, the record 50 contains a sub-table 62, which includes a list of recipient records 66, 68. Each of the recipient records 66, 68 comprise the following information: the name of the recipient 70, the recipient's e-mail address 72, one or more aliases for the recipient's name 74, and the language 76 to be used to compile the e-mail message to be sent.

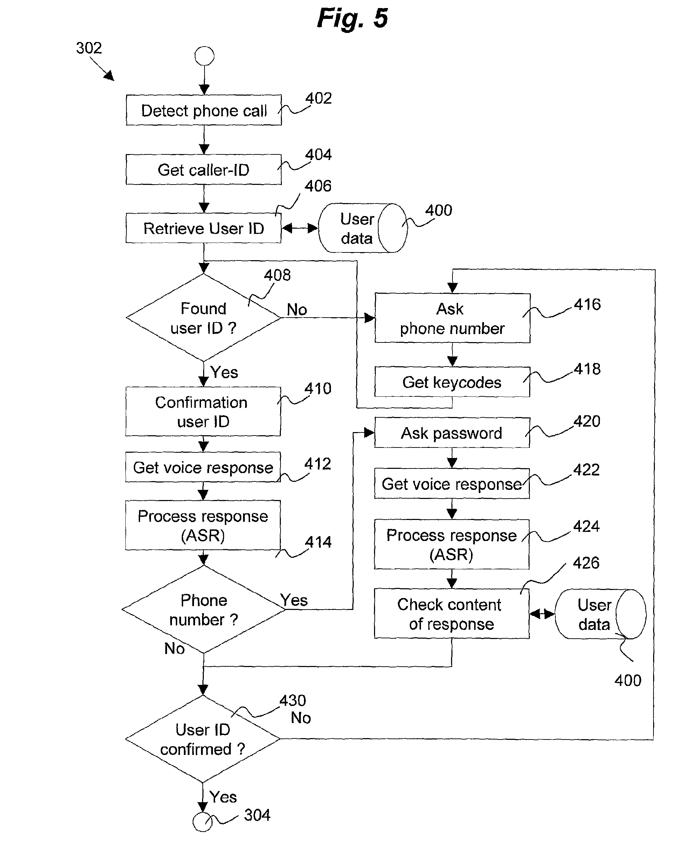

In data field 78 a password of a user is stored. It is noted that the stored password is preferably a pronounceable text, e.g. some short phrase. A user may use (speak) this spoken password at a suitable point during his interaction with the system of the present invention as will be explained below with reference to Figure 5.

Further, it is noted that the record 50 may also contain other information relating to the user and the recipients.

The created e-mail message is distributed to the recipient by an e-mail serving method as known in the art.

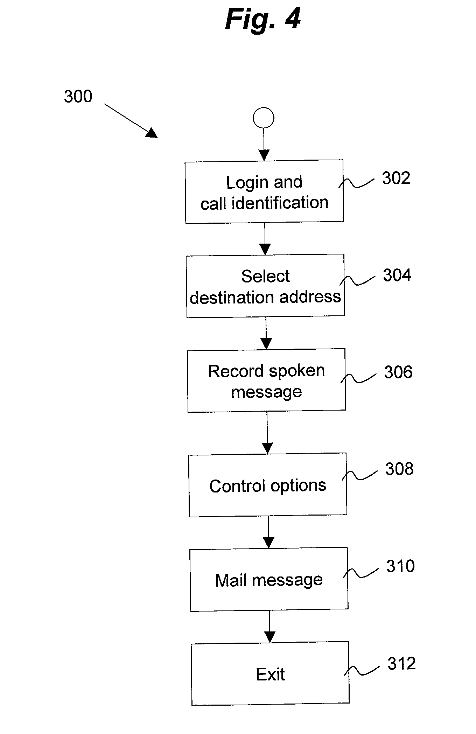

Figure 4 shows schematically a flow diagram for a procedure 300 to create and to distribute spoken e-mail messages to be carried out by the server arrangement 2 according to the present invention.

In step 302, the processing means 21 detect an incoming phone call from a user. The caller identification number CIN of the user is retrieved and verified by comparing the CIN number with the user mobile and wired telephone numbers 56 and 58 as stored in the user records 50 of the user database 400. After verification that the user is registered, the log-in procedure for the user is completed. This procedure will be explained in more detail with reference to Figure 5.

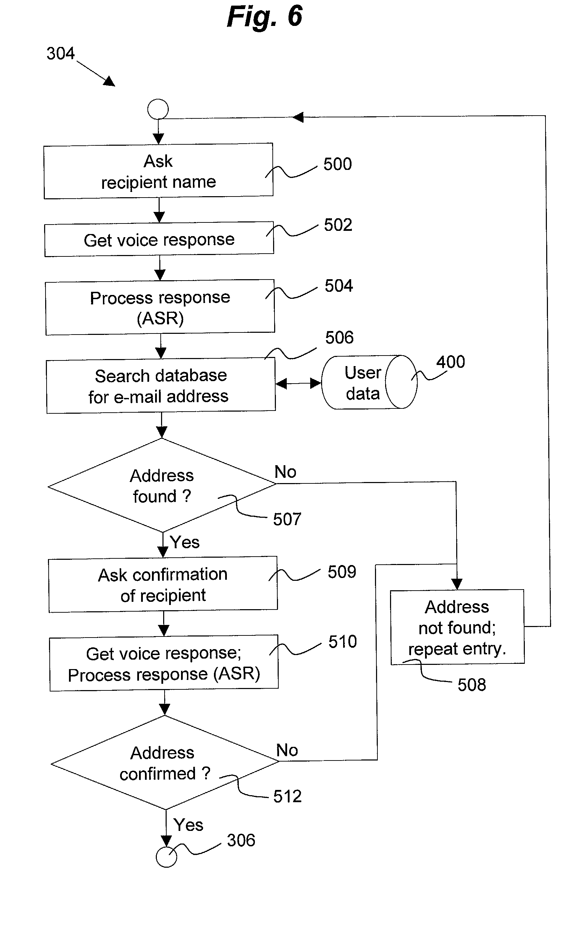

In step 304, the processing means 21 determine the destination address for the e-mail message from a voice command of the user. This procedure will be explained in more detail with reference to Figure 6.

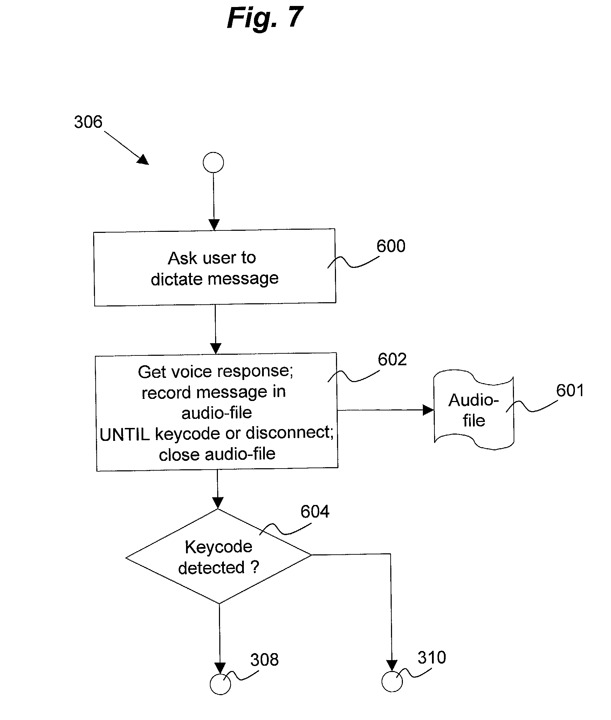

In step 306, the processing means 21 record the spoken message of the user. This procedure will be explained in more detail with reference to Figure 7.

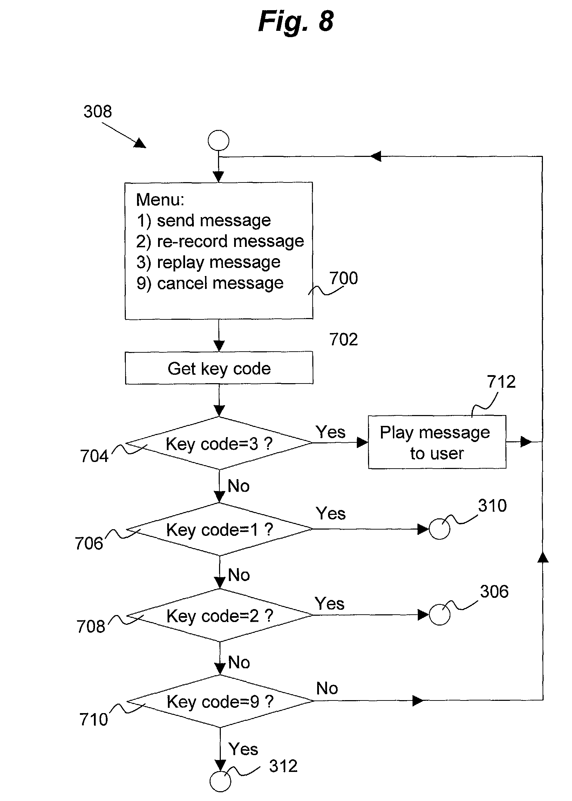

In step 308, the processing means 21 provide options for the user to control further processing of the message. This procedure will be explained in more detail with reference to Figure 8.

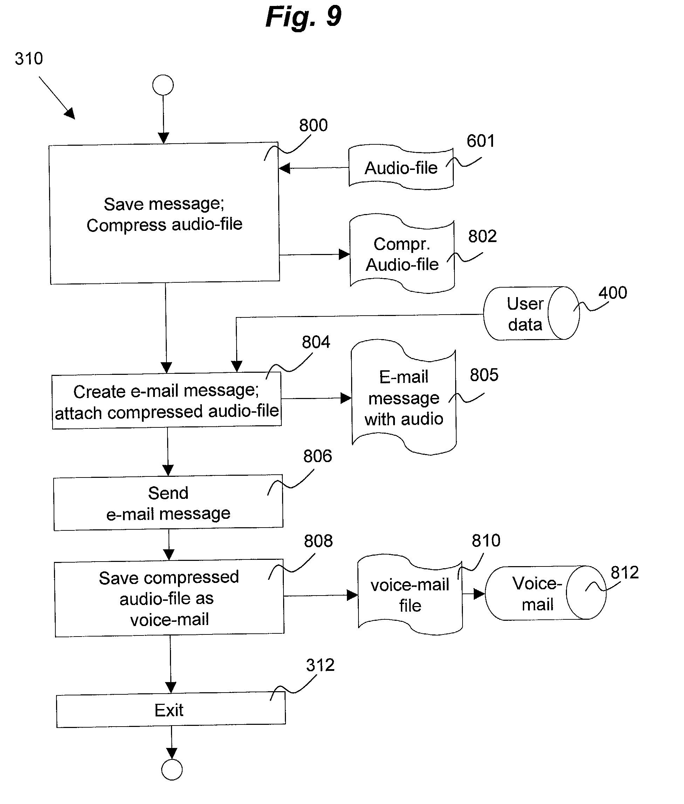

In step 310, the processing of the spoken message for sending the e-mail message is carried out by the processing means 21. Also, the message is archived with identification tags and stored in the memory means of the server 2. This procedure will be explained in more detail with reference to Figure 9.

In step 312, the procedure ends.

Figure 5 shows schematically a flow diagram for the log-in procedure 302 to be carried out by the server 2 according to the present invention.

In step 402, the processing means 21 detect an incoming phone call of a user over the network 1.

In step 404, the processing means 21 establish a connection and determine the incoming caller identification number CIN of the user. In some cases, no CIN may be available due to e.g., the fact that the caller calls from a foreign country and his CIN is withheld by the network provider.

In a subsequent step 406, the processing means 21 compare the incoming CIN number with the user mobile and wired telephone numbers 56, 58 available in the user database 400. The processing means 21 return the name of the user 52 corresponding to the incoming CIN number, or if the CIN is not found, return a specific code to indicate that the number is not in the user database 400.

In step 408, the processing means 21 check if the incoming CIN number is found. If found, the procedure 302 continues in step 410. The procedure continues in step 416 if the CIN number is not found in the user database 400.

In step 410, the processing means 21 compose an audio signal by speech synthesis to welcome the user. The message spoken by the server arrangement 2 is dynamically composed by speech synthesis and comprises the name by which the user is known to the system. The audio signal is sent over the network 1 to the telephone 4, 5 of the user. In the audio signal the user is asked to confirm his name by voice input, e.g. "yes" or "no".

In step 412, the processing means 21 receive the voice response from the user.

Subsequently, in step 414 the processing means 21 process the response by automatic speech recognition (ASR) to establish its content.

Further, the content of the response is evaluated by the processing means 21.

In the next step 430, the result of the evaluation process of the preceding step is evaluated to confirm the identity of the user. If the user confirms his identification, the procedure 302 ends and the processing will continue in procedure 304, which will be explained with reference to Figure 5. However, if the user does not confirm, the procedure continues in step 416.

In step 416, the processing means 21 perform a further identification of the user (after failure to pass step 408 or step 430). The processing means 21 compose an audio signal, typically a pre-recorded message, to ask the user to enter his identification by keying in the telephone number registered on his name in the user database 400.

In step 418, the processing means 21 receive the code keyed in by the user. Preferably, the received code has a DTMF format. The processing means 21 verify the input with the user data in database 400. Next, the procedure continues again in step 408.

In step 419 the processing means 21 tests whether step 416 to ask the phone number has been performed. If so, the procedure continues in step 420. Else, if no further identification is needed, the verification of the user's identity is completed. The procedure continues in step 430, which uses the result of the step 414.

In step 420, the processing means 21 compose an audio signal, typically a pre-recorded message, to ask the user to say a predetermined password, and send this audio signal to the user's phone 4, 5.

In step 422, the processing means 21 receive the voice response from the user.

Subsequently, in step 424 the processing means 21 process the response by automatic speech recognition (ASR) to establish its content.

In step 426, the processing means 21 search the user database 400 to obtain the record of the user identified by the key code. From the record the registered password (as stored in the database 400) is retrieved and compared with the password entered in step 422. It is noted that the stored password is preferably a pronounceable text, e.g. some short phrase. The comparison is evaluated to confirm the identity of the user. The procedure continues in step 430, which uses the result of this step.

If a match is found, the identification of the user is established. Using this information, the procedure 302 continues in step 406. If no match is found, the processing means 21 redirect the user to a procedure in which the user is notified to register his identity with the system of the present invention in the aforementioned preceding registration procedure. Also, assistance of an operator is conceivable at this point.

Figure 6 shows schematically a flow diagram for the procedure 304 to be carried out by the server 2 in order to select a destination address for a spoken e-mail message.

In step 500, the processing means 21 compose an audio signal to ask the user to name the destination name, and send this audio signal to the user's phone 4, 5.

In step 502, the processing means 21 receive the voice response from the user.

Subsequently, in step 504 the processing means 21 process the response by ASR to establish its content.

In step 506, the processing means 21 search the user database 400 to obtain the record of the user. In the e-mail address table in the user's record the processing means 21 search for a matching destination name as entered in step 502. It is noted that the user may provide the recipient's name 70, or an alias 74 for that recipient from the sub-table 62 of the user record 50.

In step 507, the match is evaluated. If a match is found, the procedure continues in step 509. Otherwise, in step 508, the processing means 21 compose an audio signal (typically a pre-recorded signal) containing a message that no matching destination name is found and that the user may repeat the step 500. The audio signal is sent to the user's telephone 4, 5. The procedure continues in step 500.

In step 509, the processing means 21 compose an audio signal by speech synthesis to ask the user to confirm the destination name found in the user database 400, and send this audio signal to the user's phone 4, 5.

In step 510, the processing means 21 receive the voice response from the user, and process the response by ASR to establish its content.

In the next step 512, the content of the response is evaluated by the processing means 21. If the user confirms the destination address for the message, the destination address (or a link to the destination address) will be stored as the selected destination address in the memory means 18, 19, 22, 23. The procedure 304 ends here and the process will continue in procedure 306, which will be explained with reference to Figure 7.

If, however, the user does not confirm, the procedure continues in step 508 (followed by step 500).

Figure 7 shows schematically a flow diagram for the procedure 306 to be carried out by the server 2 in order to enter a spoken e-mail message.

In step 600, the processing means 21 compose an audio signal to indicate to the user to start dictation of the message to be sent, and send this audio signal to the user's phone 4, 5.

In step 602, the processing means 21 receive the voice response from the user. The voice response is recorded in an audio-file 601. Recording is continued until a code (preferably, DTMF) is received from the user to stop recording, or until the phone call is disconnected. After receiving the code to stop recording, or after disconnection, the audio-file 601 is closed. The audio-file 601 is temporarily stored in the memory means of the server 2, preferably on hard-disk 18. For the purpose of identification, the audio-file 601 will be tagged in some way as known in the art by using e.g., a (user-related) identification number, a timestamp, etc.

In step 604, the processing means 21 check if the recording stopped after receiving the appropriate (DTMF) code. If so, the procedure 306 ends and the processing will continue in procedure 308, which will be explained with reference to Figure 8. Otherwise, the process continues in procedure 310, which will be explained with reference to Figure 9.

Figure 8 shows schematically a flow diagram for the procedure 308 to be carried out by the server 2 in order to allow a user to control the further processing of the spoken e-mail message.

In step 700, the processing means 21 compose an audio signal to present a menu to the user with a number of options to control the content of the message to be sent. The options may comprise the following functions:
- to listen to the recorded audio-file 601;
- to save the audio-file 601 as the message and send the message;
- to delete the audio-file 601 and record the message again;
- to cancel sending the message contained in the audio-file 601.

It is noted that other options may be possible as well. From these options the user may choose by entering a keypad (DTMF) code on his telephone 4, 5.

After composing the audio signal for the menu-message, the processing means 21 sends the audio signal over the network 1 to the user's telephone 4, 5.

In step 702, the processing means 21 receive a code as the user's response, preferably this received control code is a keypad code generated on the phone 4, 5, but it may also be voice-based. In case of a code generated on the phone 4, 5 (e.g., a DTMF signal code) the processing means 21 translate that code into a received control code. If a voice based response is received, the processing means 21 process the received response by speech recognition to obtain a received control code.

In step 704-710, the processing means 21 compare the received control code with the control codes of the possible options. The options shown in Figure 8 serve as exemplary options, other options may be conceivable.

In step 704, the processing means 21 check if the received control code equals the control code to replay the audio-file 601 to the user. If so, in step 712 the processing means 21 replay the audio-file 601 to the user and afterwards, continues in step 700. If the keypad code does not match the replay option, the procedure continues in step 706.

In step 706, the processing means 21 check if the received control code equals the control code to save the audio-file as the spoken e-mail message and to send the message. If so, the process continues in procedure 310 which will be explained with reference to Figure 9. Else, the procedure 308 continues in step 708.

In step 708, the processing means 21 check if the received control code equals the control code to delete the audio-file 601 and record a new message. If so, the process continues in procedure 306. Otherwise the procedure is continued in step 710.

In step 710, the processing means 21 check if the received control code equals the control code to cancel sending the message contained in the audio-file 601. If so, the process continues in procedure 312.

In procedure 312, the process of creating and distributing a spoken e-mail message ends. The processing means 21 may compose an audio signal (typically, pre-recorded) that comprises the message indicating the end of the process.

If none of the possible options was chosen by the user, the procedure returns to step 700.

Figure 9 shows schematically a flow diagram for the procedure 310 to be carried out by the server 2 in order to send a spoken e-mail message.

In step 800, the processing means 21 read the audio-file 601 stored in the memory means and compress the audio-file into a smaller compressed audio-file 802, e.g., in a 4-bit PCM (Pulse Code Modulation) format. The audio-file 601 is compressed to reduce the download time for the spoken e-mail message. Also, the storage required on the computer 6 of the recipient is reduced in this manner.

In this step, the processing means 21 may also compose an audio message for the user to indicate that his e-mail message will be sent. Also, the connection to the user's telephone 4, 5 may be broken here. Alternatively, the user may be redirected to procedure 304 to send another message.

In step 804, an e-mail message 805 is created. The processing means 21 read the selected destination address from the memory means 18, 19, 22, 23, and create an e-mail message with this selected destination address. Further, the processing means 21 read the user's record 50 from the user database 400, and extract from this record 50, the sender's e-mail address 60. Also, the processing means 21 generate a mail body that comprises a predetermined text block which may contain an explanatory message and may comprise further information to the addressee. The sender's e-mail address 60 and the mail-body are added to the e-mail message that is being created.

If required, the processing means 21 may add some further additional personalized text and instructions to the text of the e-mail message. The language of the additional text may be the language 76 defined in the user's record 50 for that recipient.

Also, the processing means 21 add a contact telephone number, a unique identification number and a PIN (Personal Identification Number) code. The unique identification number and PIN code may have to be computed in this step, or possibly before. The purpose of these numbers will be explained with reference to step 808 of procedure 310.

The processing means 21 read the compressed audio-file 802 from the memory means 18, 19, 22, 23 and add this file as an attachment to the e-mail message.

In step 806, the processing means 21 transfer the completed e-mail message 805 to the e-mail server process, also running on the server 2, for sending to the e-mail address of the recipient. The sending of the e-mail message may be done in any suitable manner as known in the art.

In step 808, the processing means 21 store the compressed audio-file 802 as a voice-mail file 810 in the voice-mail database 812. For the purpose of identification, the voice-mail file 805 is tagged, preferably by the unique identification number and the PIN (Personal Identification Number) code.

When, at a later time, the recipient's personal computer 6 receives the e-mail message 805 containing the attached compressed audio-file 802, the recipient may find that he can not replay this audio-file 802, for example because the personal computer 6 lacks necessary hardware or software. In that case, the recipient may follow the instructions added by the server 2 and call the contact telephone number given in the e-mail message 805. After entering the unique identification number and PIN code, the voice-mail server process, also running on this server 2, may replay the stored e-mail message 805 to the recipient.

For the creation and distribution of spoken e-mail messages, the server arrangement 2 advantageously integrates a number of technologies such as voice controlled input of a user, automatic speech recognition, speech synthesis, database operations, e-mail serving and voice-mail serving. Due to the requirements of processing power, in a preferred embodiment the server is arranged as a distributed system 100 connected by a local network. Figure 10 shows schematically a preferred embodiment of the distributed system 100 according to the present invention. The distributed system 100 comprises a central server 110, an interactive voice response system 120, an e-mail server 130 and an automatic speech recognition system 140 which are interlinked by a suitable local network 140. Each system 110, 120, 130, 140 may be arranged as the server 2 as shown in Figure 2. Also, each system 110, 120, 130, 140 may be connected to the network 1 as well.

Preferably, the central server 110 handles the data traffic between the other systems 120, 130, 140. The interactive voice response system 120 is arranged to handle the communication with the user and to record the spoken message to be sent. The automatic speech recognition system 140 is arranged to analyse the voice input of the user and to synthesise voice response to the user. Also the automatic speech recognition system 140 is preferably arranged as a voice-mail server for a recipient who chooses to replay e-mail messages addressed to him by phone. The automatic speech recognition system 140 is arranged to output a stored voice-mail as an audio signal to that recipient. The e-mail server 130 is arranged to distribute outgoing e-mails to the network 1. Data storage may be arranged in any suitable way as known to those skilled in the art.

It will be appreciated that other embodiments may be provided in accordance with the present invention. These and other embodiments that may readily be understood from the description given above, will be within the scope of protection as defined in the accompanying claims.

## Claims

1. Server arrangement (2) for sending voice-based messages using e-mail and storing such messages as voice-mail, comprising processing means (21), memory means (18, 19, 22, 23, 24), and input/output means (8), said processing means (21) being connected to said memory means (18, 19, 22, 23, 24) and to said input/output means (8), said input/output means (8) being connected to a network (1), said memory means (18, 19, 22, 23, 24) comprising a user database (400), said server arrangement (2) being arranged with the following messaging functions:
- to record a spoken message received from a caller as a voice-mail message for a recipient, said recipient having an e-mail address;
- to replay said voice-mail message for said recipient;
- to convert said spoken message into an electronic data file, said electronic data file being playable as sound;
- to attach said electronic data file as an attachment to an e-mail message;
- to send said e-mail message to said e-mail address of said recipient;
**characterised in that**
said server arrangement (2) is arranged with a voice controlled interface for said caller to enable the following control capabilities of said server arrangement (2):
- verification of the identity of said caller;
- selection of said recipient; and
- control of said messaging functions.

2. Server arrangement (2) for sending voice-based messages using e-mail and storing such messages as voice-mail, according to claim 1, **characterised in that** by said voice controlled interface said server arrangement (2) is arranged to receive voice commands to control said control capabilities, and to convert said voice commands by speech recognition into electronic input commands for said control capabilities.

3. Server arrangement (2) for sending voice-based messages using e-mail and storing such messages as voice-mail, according to claim 2, **characterised in that** said user database (400) comprises for said caller in a user record (50) a data field (56, 58) relating to a caller identification number (CIN) for said caller,
and that in said verification of the identity of said caller, said server arrangement (2) is arranged to search said user database (400) and to compare a received caller identification number (CIN) with said data field relating to said caller identification number (CIN) for said caller, to verify said identity of said caller.

4. Server arrangement (2) for sending voice-based messages using e-mail and storing such messages as voice-mail, according to claim 2, **characterised in that** said user database (400) comprises for said caller in said user record (50) alias data (74) relating to a recipient and a corresponding e-mail address data (72) for said recipient, and that in said selection of said recipient, said server arrangement (2) is arranged to search said user database (400) and to compare a received recipient name with said data field (74) relating to said recipient, to select said e-mail address (72) for said recipient.

5. Server arrangement (2) for sending voice-based messages using e-mail and storing such messages as voice-mail, according to claim 2, **characterised in that** said user database (400) comprises for said caller in a user record (50) a data field (78) relating to a password for said caller,
and that in said verification of the identity of said caller, said server arrangement (2) is arranged to search said user database (400) and to compare a spoken password with said data field (78) relating to said password for said caller, to verify said identity of said caller.

6. Server arrangement (2) for sending voice-based messages using e-mail and storing such messages as voice-mail, according to claim 5, **characterised in that** said data field (78) relating to said password comprises a pronounceable phrase.

7. Server arrangement (2) for sending voice-based messages using e-mail and storing such messages as voice-mail, according to any preceding claim, **characterised in that** said server arrangement (2) is arranged to add contacting data to said e-mail message for said recipient to allow said recipient to contact said server arrangement (2) for replaying said spoken message as said voice-mail message, said contacting data comprising a contact telephone number, a message identification number for said voice-mail message, and a personal identification number for said recipient.

8. Method for sending voice-based messages using e-mail and storing such messages as voice-mail, comprising steps to enable the following messaging functions:
- recording a spoken message received from a caller as a voice-mail message for a recipient, said recipient having an e-mail address;
- replaying said voice-mail message for said recipient;
- converting said spoken message into an electronic data file, said electronic data file being playable as sound;
- attaching said electronic data file as an attachment to an e-mail message;
- sending said e-mail message to said e-mail address of said recipient;
**characterised in that**
said method comprises the step of enabling by means of a voice controlled interface for said caller the following control capabilities:
- verification of the identity of said caller;
- selection of said recipient; and
- control of said messaging functions.

9. Computer program product to be loaded by a server arrangement (2) for sending voice-based messages using e-mail and storing such messages as voice-mail, comprising processing means (21), memory means (18, 19, 22, 23, 24), and input/output means (8), said processing means (21) being connected to said memory means (18, 19, 22, 23, 24) and to said input/output means (8), said input/output means (8) being connected to a network (1), said memory means (18, 19, 22, 23, 24) comprising a user database (400), said server arrangement (2) being arranged with the following messaging functions:
- to record a spoken message received from a caller as a voice-mail message for a recipient, said recipient having an e-mail address;
- to replay said voice-mail message for said recipient;
- to convert said spoken message into an electronic data file, said electronic data file being playable as sound;
- to attach said electronic data file as an attachment to an e-mail message;
- to send said e-mail message to said e-mail address of said recipient;
the computer program product, after being loaded by said server arrangement, providing said computer arrangement by means of a voice controlled interface for said caller with the capability to control:
- verification of the identity of said caller;
- selection of said recipient; and
- said messaging functions.

10. Data carrier provided with a computer program product as claimed in claim 9.
